# EUROPEAN PATENT SPECIFICATION

(11) **EP 2 130 864 B1**
(45) Date of publication and mention of the grant of the patent: **28.03.2012**
(21) Application number: 08010301.3
(22) Date of filing: 05.06.2008
(51) Int. Cl.: C08L 23/08, C08L 83/04, H01B 3/00

(54) **Flame retardant polyolefin composition comprising a high amount of inorganic filler**
Flammenhemmende Polyolefin-Zusammensetzung mit einem hohen Gehalt an anorganischem Füllmaterial
Composition de polyoléfine ignifuge comprenant une grande quantité de matériau de remplissage inorganique

(43) Date of publication of application: 09.12.2009
(73) Proprietor: Borealis AG, 1220 Vienna (AT)
(72) Inventor: Sultan, Bernt-Ake, SE-44442 Stenungsund (SE); Junkvist, Jonas, SE-44445 Stenungsund (SE)
(74) Representative: Kador & Partner

(56) References cited:
- EP-A- 0 393 959
- EP-A- 1 512 718

## Description

The present invention relates to a flame retardant polymer composition, to an article, in particular a wire or cable, comprising said flame retardant polymer composition, and to the use of said composition for the production of a layer of a wire or cable.

For improving the flame retardancy of polymers, several approaches are known in the art. First, it is known to include compounds containing halides into the polymer. However, these materials have the disadvantage that by burning hazardous and corrosive gases like hydrogen halides are deliberated. This is also a disadvantage of flame retardant polymer compositions based on PVC.

In a further approach, flame retardant compositions include relatively large amounts, typically 50 to 70 wt% of inorganic fillers as e.g. hydrated and hydroxy compounds, which during burning decompose endothermically and deliberate inert gases at temperatures in the range of 200 to 600°C. Such organic fillers e.g. include Al(OH)₃ and Mg(OH)₂. However, these flame retardant materials suffer from the high costs of the inorganic fillers and the deterioration of the processability and mechanical properties due to the high amount of filler.

A third approach as disclosed e.g. in EP 0 393 959 uses a silicon fluid or gum in a composition together with an organic polymer comprising an acrylate or acetate and an inorganic filler which is neither a hydroxide nor a substantially hydrated compound. The flame retardancy of such compositions is based on synergistic effects between these three components which in case of burning lead to the formation of a physically and firmly stable char layer that protects the polymer from further burning. Compounds based on such compositions show good flame retardancy in the limiting oxygen index (LOI) test method according to ISO 4589-A-IV. Sheathed cables and larger conduit (unsheathed) cables also fulfill specific cable tests, like e.g. the single-wire burning test according to IEC 332-1. Cables and wires, however, based on such compositions have difficulties in fulfilling the requirements of bunch tests, e.g. FIPEC according to prEN 50399:2007. Hence, the flame retardancy of such compositions can still be improved.

It is therefore an object of the present invention to provide a flame retardant polyolefin composition comprising at least one polar olefin copolymer, a silicone-group containing compound and an inorganic filler which is neither a hydroxide nor a substantially hydrated compound that can be used as layer in wires and cables in order to improve flame retardancy especially of bunches of wires and cables.

It has surprisingly be found that the object of the present invention can be achieved by using a polymer composition for the production of a flame retardant layer which comprises an inorganic filler which is neither a hydroxide nor a substantially hydrated compound in an amount of 48 to 70 wt% of the total weight of the polymer composition.

The present invention therefore provides a flame retardant polymer composition comprising
(A) at least one polar olefin copolymer comprising one or more comonomer units selected from (meth)-acrylate and/or (meth)-acrylic acid in an amount of 20 to 50 wt% of the total weight of the polymer composition,
(B) a silicone-group containing compound, and
   (C) an inorganic filler which is neither a hydroxide nor a substantially hydrated compound in an amount of 48 to 70 wt% of the total weight of the polymer composition,
wherein the at least one olefin copolymer (A) comprises one or more comonomer units selected from (meth)-acrylate and/or (meth)-acrylic acid in an amount of 9.0 to 60 wt% of the polar olefin copolymer.

The flame retardant polymer composition according to the invention fulfills the requirements of class B2 and C of the FIPEC test according to prEN 50399:2007.

The inventive polymer composition further proves good heat release and mechanical properties.

Preferably, the composition is free of halogen- and phosphorous-containing compounds as flame retardancy aids, i.e. such compounds, if at all, are present in the composition in an amount of below 3000 ppm.

More preferably, the composition is entirely free of halogen-containing compounds. However, especially phosphorous containing-compounds may be present in the composition as stabilizers, usually in an amount of below 2000 ppm, more preferably below 1000 ppm.

In a preferred embodiment of the inventive composition, component (C) is present in an amount of 49 to 70 wt%, and most preferred in an amount of 50 to 60 wt% the total composition.

The numbering of chemical groups, as used herein, is in accordance with the IUPAC system in which the groups of the periodic system of the elements are numbered from 1 to 18.

Component (C), i.e. the inorganic filler material suitable for use in the inventive flame retardant polymer composition, comprises all filler materials as known in the art which are neither a hydroxide nor a substantially hydrated compound. Component (C) may also comprise a mixture of any such filler materials.

It is preferred that component (C) comprises a carbonate, oxide and/or sulphate of an element of groups 1 to 13 of the Periodic System of the Elements.

In a preferred embodiment of the inventive composition, component (C) comprises an inorganic carbonate, more preferred a carbonate of a metal, preferably of group 2 of the periodic system of the elements, aluminium and/or zinc, and still more preferred is calcium carbonate or magnesium carbonate. Also in these preferred embodiments concerning component (C), mixtures of any of the preferred materials mentioned, may be used. Furthermore, also polynary compounds, such as e.g. huntite (Mg₃Ca(CO₃)₄) may be used.

Particularly preferred, component (C) of the inventive flame retardant polymer composition comprises 50 wt% or more of calcium carbonate and further preferred is substantially made up completely of calcium carbonate.

The inorganic filler may comprise a filler which has been surface-treated with an organosilane, a polymer, a carboxylic acid or salt etc. to aid processing and provide better dispersion of the filler in the organic polymer. Such coatings usually do not make up more than 3 wt% of the filler.

Preferably, the compositions according to the present invention contain less than 3 wt% of organo-metallic salt or polymer coatings.

In a further preferred embodiment of the inventive composition, component (B) is a silicon fluid or a gum, or a copolymer of ethylene and at least one other comonomer which includes a silicone group preferably a vinyl unsaturated polybishydrocarbylsiloxane, or a mixture of these compounds.

Silicon fluids and gums suitable for use in the present inventions are known and include for example organopolysiloxane polymers comprising chemically combined siloxy units selected from the group consisting of A₃SiO_{0.5}R₂SiO, R¹SiO_{1.5}, R¹R₂SiO_{0.5}, RR¹SiO, R¹₂SiO, RSiO_{1.5} and SiO₂ units and mixtures thereof in which each R represents independently a saturated or unsaturated monovalent hydrocarbon radical and each R¹ represents a radical such as R or a radical selected from the group consisting of hydrogen, hydroxyl, alkoxy, aryl, vinyl or allyl radicals.

The organopolysiloxane preferably has a number average molecular weight Mn of approximately 10 000 to 1,000,000. More preferably number average molecular weight Mn of approximately 100 000 to 500,000. The molecular weight distribution (MWD) measurements were performed using GPC. CHCl₃ was used as a solvent. Shodex-Mikrostyragel (10<5>, 10<4>, 10<3>, 100) column set, RI-detector and a NMWD polystyrene calibration were used. The GPC tests were performed at room temperature.

The silicone fluid or gum can contain fumed silica fillers of the type commonly used to stiffen silicone rubbers, e.g. up to 50% by weight.

As mentioned above, component (B) may also comprise a copolymer of ethylene and at least one other comonomer including a vinyl unsaturated polybishydrocarbylsiloxane according to formula (I): 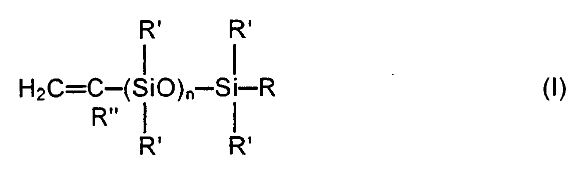 wherein n = 1 to 1000 and R and R' independently are vinyl, alkyl branched or unbranched, with 1 to 10 carbon atoms; aryl with 6 or 10 carbon atoms; alkyl aryl with 7 to 10 carbon atoms; or aryl alkyl with 7 to 10 carbon atoms. R" is hydrogen or an alkyl chain.

Such compounds e.g. are disclosed in WO 98/12253 the contents of which is herein enclosed by reference.

It is preferred that component (B) is present in an amount of 1.0 to 20 %, more preferred 1.5 to 17 % and still more preferred 2.0 to 15 % by weight of the total composition.

Preferably, component (B) comprises, more preferably consists of polydimethylsiloxane and/or a copolymer of ethylene and vinyl polydimethylsiloxane. These components (B) are preferred due to commercial availability.

The term "copolymer" as used herein is meant to include copolymers produced by copolymerization or by grafting of monomers onto a polymer backbone.

The inventive flame retardant polymer composition comprises at least one polar olefin copolymer (A) comprising one or more comonomer units selected from (meth)-acrylate and/or (meth)-acrylic acid in an amount of 9.0 to 60 wt% of the polar olefin copolymer.

In a preferred embodiment of the inventive composition, the at least one polar olefin copolymer (A) comprises an ethylene copolymer comprising (meth)-acrylate and/or (meth)-acrylic acid comonomer units.

Preferably, the at least one polar olefin copolymer comprises one or more comonomer units selected from (meth)-acrylate and/or (meth)-acrylic acid in an amount of 9.5 to 60.0 wt%, more preferred 10.0 to 60.0 wt%, still more preferred 11.0 to 45.0 wt%, most preferred 12.0 to 30.0 wt% of the polar olefin copolymer.

It is further preferred that the at least one polar olefin copolymer (A) comprises one or more co-monomers selected from C₁- to C₆- alkylacrylates, C₁- to C₆- alkylmethacrylates, acrylic acid and methacrylic acid. The polar olefin copolymer may also contain ionomeric structures thereof (like e.g. DuPont's Surlyn types).

Particularly preferred, the polar olefin copolymer comprises a copolymer of ethylene with C₂ - C₄- alkyl acrylates.

The polar olefin copolymer may have a MWD of 20 or higher.

Suitable polymers for forming component (A) may further comprise polyolefins, polyesters, polyethers and polyurethanes. Elastomeric polymers may also be used such as, for example, ethylene/propylene rubber (EPR), ethylene/propylene-diene monomer rubbers (EPDN), thermoplastic elastomer rubber (TPE) and acrylonitrile butadiene rubber (NBR). Silane-crosslinkable polymers may also be used, i.e. polymers prepared using unsaturated silane monomers having hydrolysable groups capable of crosslinking by hydrolysis and condensation to form silanol groups in the presence of water and, optionally, a silanol condensation catalyst.

Component (A) may preferably be formed by at least one polar olefin copolymer comprising acrylate and/or acrylic acid comonomer units and olefin homo- or copolymers. Said homo- or copolymers may be homopolymers or copolymers of ethylene, propylene and butene and polymers of butadiene or isoprene. Suitable homopolymers and copolymers of ethylene include low density polyethylene, linear low, medium or high density polyethylene and very low density polyethylene.

It is further preferred that the polar olefin copolymer is present in an amount of 30 parts by weight or more, more preferred of 50 parts per weight or more, and still more preferred of 70 parts per weight or more, per 100 parts per weight with respect to component (A).

In addition to ethylene and the defined comonomers, the copolymers can also contain additional monomers.

In a preferred embodiment of the present invention the amount of component (A) is 25 to 40 wt% of the total weight of the polymer composition.

The inventive composition may further comprise a metal oxide or mixtures of different metal oxides.

Preferably, the metal oxide is selected from the oxides of the metals of group 2 to 15, more preferably of groups 2 to 13 of the periodic system of the elements.

Preferably, the metal oxide is selected from the group of Al₂O₃, Fe₂O₃ and/or TiO₂, and still more preferably is TiO₂.

Preferably, the metal oxide is present in the inventive flame retardant polymer composition in an amount of 10 wt% or less, more preferred of 5 wt% or less, and still more preferred of 3 wt% or less with respect to the total weight of the polymer composition.

In addition to the above described components, the inventive compositions may also contain additional conventional polymer ingredients such as, for example, antioxidants or UV stabilizers in small amounts.

The flame retardant polymer composition according to the invention may be prepared by mixing together the components by using any suitable means such as conventional compounding or blending apparatus, e.g. a Bunbury Mixer, a 2-roll rubber mill or a twin screw extruder, Buss co-kneader, etc..

Generally, the composition will be prepared by blending the components together at a temperature which is sufficiently high to soften and plasticise the organic polymer, typically at a temperature in the range of 120 to 200 °C.

The flame retardant compositions according to the present invention can be used in many and diverse applications and products. The compositions can for example be moulded, extruded or otherwise formed into mouldings, sheets and fibers.

As already mentioned, a particularly preferred use of the flame retardant compositions is for the manufacture of wire and cables. The compositions can be extruded about a wire or a cable to form an insulating or jacketing layer or can be used as bedding compounds.

The flame retardant composition of the invention preferably show flame spread of less than 1.5 m, more preferably of less than 1.3 m, most preferably of less than 1.0 m, determined according to prEN 50399:2007.

Further, the inventive compositions preferably show a peak heat release rate of not more than 195 kW/m², more preferably not more than 185 kW/m², most preferably not more than 180 kW/m², determined by cone calorimetry according to ISO 5660-1.

Additionally, the inventive compositions preferably show a total heat release of not more than 72 MJ/m², more preferably not more than 70 MJ/m², determined by cone calorimetry according to ISO 5660-1.

Further to the improved flame spread and heat release properties the inventive compositions preferably show good mechanical properties.

The flame retardant polymer composition of the present invention preferably shows a tensile strength of at least 6.0 MPa, more preferably of at least 6.4 MPa, determined according to ISO 527-2.

Further, the inventive polymer compositions have an elongation at break of at least 300 %, more preferably of at least 350 % most preferably of at least 400 %, determined according to ISO 527-2.

In the following the present invention is further illustrated by means of examples.

### Examples

### 1. Measurement Methods

### a) Melt Flow Rate

The melt flow rate MFR₂ was measured in accordance with ISO 1133 and is indicated in g/10 min. The MFR of polyethylene is determined at a temperature of 190°C and a load of 2.16 kg.

### b) Flame spread test

The flame spread was measured according to prEN 50399:2007 with the exceptions that only the flame spread was measured during the test and that the air flow was regulated to 5 m³ per minute.

### c) Comonomer content

Comonomer content (wt%) was determined in a known manner based on Fourier transform infrared spectroscopy (FTIR) determination calibrated with ¹³C-NMR. All FTIR methods were run by FTIR a Perkin Elmer 2000, 1 scan, resolution 4 cm⁻¹. The peak for the comonomer was compared to the peak of polyethylene (e.g. the peak for butyl acrylate at 3450 cm⁻¹ was compared to the peak of polyethylene at 2020 cm⁻¹ and the peak for silane at 945 was compared to the peak of polyethylene at 2665 cm⁻¹. The calibration with ¹³C-NMR is effected in a conventional manner which is well documented in the literature. Such calibrations are evident for a skilled person. As a reference for calibration, reference is made to Haslam J, Willis HA, Squirrel DC., "Identification and analysis of plastics", 2^{nd} Edition, London, Iliffe Books, 1972. The weight-% was converted to mol-% by calculation.

The polar comonomer content can also be analyzed by NMR, which gives corresponding results as Comonomer Content (NMR). The comonomer content was determined by using ¹³C -NMR. The ¹³C -NMR spectra were recorded on Bruker 400 MHz spectrometer at 130°C from samples dissolved in 1,2,4-trichlorobenzene/benzene-d6 (90/10 w/w).

An alternative method to determine comonomer content (e.g. silane and polar comonomer) is to use NMR-method which would give equal results to the above X-ray and FTIR method, i.e. results would be comparable to the purposes of the invention.

### d) Average particle size

The particle size distribution and average particle size (d50-value) was determined with a Sedigraph 5100. This sedimentation method determines particle size by measuring the gravity-induced travel rates of different size particles in a liquid with known properties. The rate at which particles fall through the liquid is described by Stokes' Law. The largest particles fall fastest, while the smallest particles fall slowest, until all have settled and the liquid is clear. Since different particles rarely exhibit a uniform shape, each particle size is reported as an "Equivalent Spherical Diameter", the diameter of a sphere of the same material with the same gravitational speed.

Sedimentation rate is measured by using a finely collimated beam of low energy X-rays which pass through the sample cell to a detector. Since the particles in the cell absorb X-rays, only a percentage of the original X-ray beam reaches the detector. This is the raw data used to determine the distribution of particle sizes in a cell containing sedimentation liquid.

The X-ray source and detector assembly remain stationary, while the cell moves vertically between them. Due to the beam split feature, automatic cell positioning is guaranteed, eliminating the uncertainty associated with other systems due to their movement of the assembly. The cell contains a transparent window through which X-rays from the source reach the detector. The distribution of particle mass at various points in the cell affects the number of X-ray pulses reaching the detector. This X-ray pulse count is used to derive the particle diameter distribution and the percent mass at given particle diameters. The average particle size is defined as the particle size when 50 weight-% of the material is finer and 50 weight-% of the material is coarser.

### e) Tensile Strength

Tensile strength properties were determined according to ISO 527-2. Compression moulded specimens of type 1A were used, which were prepared according to ISO 1872-2B. Tensile modulus (in MPa) was determined according to ISO 527-2. The measurement was conducted at 23 °C temperature with an elongation rate of 1 mm/min.

### f) Tensile Elongation at Break

Tensile elongation at break (in %) was determined according to ISO 527-2, specimens as above in the determination of the tensile strength. The measurement was conducted at 23 °C temperature with an elongation rate of 50 mm/min.

### g) Cone Calorimetry

The pressed plaques (100x100x3 mm) were tested in a cone calorimeter according to ISO 5660-1. The plaques are done as described blow under item 5. of the Example section. The cone was in horizontal position. A burner capacity of 35 kW/m² was used.

### 2. Compounding of compositions

For the flame spread test flame retardant polymer compositions according to the invention and for comparative purpose were produced by mixing together the components in a BUSS-co-kneader at a temperature of 150°C. The "Screw" speed was 30 rpm.

For all other tests flame retardant polymer compositions according to the invention and for comparative purpose were produced by compounding together the components in a roller mill at a temperature of 180 °C.

### 3. Produced compositions

The compositions according to the invention were produced by mixing .

### Inventive Composition 1:

- 36.9 wt% ethylene butylacrylate (BA) copolymer with BA content of 13 wt%, MFR₂ = 0.5 g/10min;
- 12.5 wt% of silicone masterbatch with 40 wt% of polydimethylsiloxane, and 60 wt% of LDPE;
- 50 wt% CaCO₃ coated with stearic acid, having an average particle size (d₅₀-value) of 0.65 microns;
- 0.3 wt% Irganox MD 1024, distributed by Ciba Specialty Chemicals
- 0.3 wt% Irganox 1010, distributed by Ciba Specialty Chemicals

### Inventive Composition 2:

- 36.9 wt% ethylene butylacrylate (BA) copolymer with BA content of 13 wt%, MFR₂ = 0.5 g/10min;
- 12.5 wt% of silicone masterbatch with 40 wt% of polydimethylsiloxane, and 60 wt% of LDPE;
- 50 wt% CaCO₃ coated with stearic acid, having an average particle size (d₅₀-value) of 1.4 microns;
- 0.3 wt% Irganox MD 1024, distributed by Ciba Specialty Chemicals
- 0.3 wt% Irganox 1010, distributed by Ciba Specialty Chemicals

### Comparative Composition 1:

- 50.9 wt% ethylene butylacrylate (BA) copolymer with BA content of 13 wt%, MFR₂ = 0.5 g/10min;
- 12.5 wt% of silicone masterbatch with 40 wt% of polydimethylsiloxane, and 60 wt% of LDPE;
- 36 wt% CaCO₃ coated with stearic acid, having an average particle size (d₅₀-value) of 0.65 microns;
- 0.3 wt% Irganox MD 1024, distributed by Ciba Specialty Chemicals
- 0.3 wt% Irganox 1010, distributed by Ciba Specialty Chemicals

### Comparative Composition 2:

- 50.9 wt% ethylene butylacrylate (BA) copolymer with BA content of 13 wt%, MFR₂ = 0.5 g/10min;
- 12.5 wt% of silicone masterbatch with 40 wt% of polydimethylsiloxane, and 60 wt% of LDPE;
- 36 wt% CaCO₃ coated with stearic acid, having an average particle size (d₅₀-value) of 1.4 microns;
- 0.3 wt% Irganox MD 1024, distributed by Ciba Specialty Chemicals
- 0.3 wt% Irganox 1010, distributed by Ciba Specialty Chemicals

### Comparative Composition 3:

- 36.9 wt% ethylene butylacrylate (BA) copolymer with BA content of 8 wt%, MFR₂ = 0.3 g/10min;
- 12.5 wt% of silicone masterbatch with 40 wt% of polydimethylsiloxane, and 60 wt% of LDPE;
- 50 wt% CaCO₃ coated with stearic acid, having an average particle size (d₅₀-value) of 1.4 microns;
- 0.3 wt% Irganox MD 1024, distributed by Ciba Specialty Chemicals
- 0.3 wt% Irganox 1010, distributed by Ciba Specialty Chemicals

### Comparative Composition 4:

- 36.9 wt% ethylene vinylacetate (VA) copolymer with VA content of 19 wt%, MFR₂ = 0.65 g/10min;
- 12.5 wt% of silicone masterbatch with 40 wt% of polydimethylsiloxane, and 60 wt% of LDPE;
- 50 wt% CaCO₃ coated with stearic acid, having an average particle size (d₅₀-value) of 1.4 microns;
- 0.3 wt% Irganox MD 1024, distributed by Ciba Specialty Chemicals
- 0.3 wt% Irganox 1010, distributed by Ciba Specialty Chemicals

### 4. Cables

The cables consist of three solid copper conductors with a cross section area of 1.5 mm² covered with an insulation with a thickness of 0.5 mm. The insulated conductors are twisted and covered with bedding. The total diameter of the conductors, insulation and bedding is 6.0 mm. The different compositions described above are the then put as a jacket on top of the bedding. The finale diameter of the cable is 8.4 mm.

The insulation consist of a composition made of
- 51.8 wt% ethylene butylacrylate (BA) copolymer with BA content of 17 wt%, MFR₂ = 1.1 g/10min;
- 5 wt% of silicone masterbatch with 40 wt% of polydimethylsiloxane;
- 12.5 wt% of polypropylene with MFR_{2, 230C} = 1.3 g/10min;
- 30 wt% CaCO₃ coated with stearic acid, having an average particle size (d₅₀-value) of 1.4 microns;
- 0.1 wt% Irganox MD 1024, distributed by Ciba Specialty Chemicals;
- 0.35 wt% Irganox 1010, distributed by Ciba Specialty Chemicals;
- 0.125 wt% Tinuvin 622, distributed by Ciba Specialty Chemicals;
- 0.125 wt% Chimasorb 944, distributed by Ciba Specialty Chemicals.

The bedding is called FM1239 and distributed by Melos GmbH.

The jackets were extruded with wire guide with diameter of 7.9 mm and a die with a diameter of 14.6 mm.

### 5. Plaques

The plaques was pressed in a Colin press at temperature of 150 °C. in a first step a pressure of 20 bar was applied on to the material for 5 minutes and in a second step a pressure of 200 bar was applied for 5 minutes.

### 6. Results

Cables with a flame retardant layer made of inventive compositions 1 and 2 and comparative compositions 1 and 2 were subjected to a flame spread test.

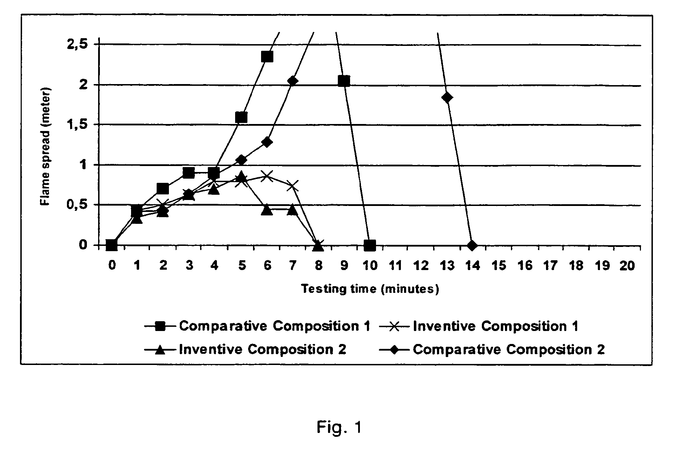

The results of the flame spread test are combined in a graph Fig. 1 showing the flame spread in meters on the ordinate and the testing time in minutes on the abscissa.

Fig. 1 shows that both comparative polymer compositions are completely burned off whereas both inventive compositions show an improved flame retardancy with a flame spread of less than one meter. It can further be seen that the flame retardancy in the bunch test is not dependent on the average particle size of the calcium carbonate filler. The bunches of cables comprising the inventive polymer compositions fulfill the requirements of class B2 or C according to the test.

On test specimens of inventive composition 2 (Inv 2) and comparative compositions 3 (Comp 3) and 4 (Comp 4) tensile strength, elongation at break, peak heat release rate and total heat release were determined. The results are listed in Table 1.

**Table 1: Determination of tensile strength, elongation at break, peak heat release rate and total heat release**

| | Inv 2 | Comp 3 | Comp 4 |
|---|---|---|---|
| Tensile strength [MPa] | 6.6 | 5.8 | 10.3 |
| Elongation at break [%] | 411 | 280 | 573 |
| Cone calorimeter Peak Heat Release Rate [kW/m²] | 174 | 196 | 353 |
| Cone calorimeter Total Heat Release [MJ/m²] | 69 | 73 | 74 |

## Claims

1. A flame retardant polymer composition comprising
(A) at least one polar olefin copolymer comprising one or more comonomer units selected from (meth)-acrylate and/or (meth)-acrylic acid in an amount of 20 to 50 wt% of the total weight of the polymer composition,
(B) a silicone-group containing compound, and
(C) an inorganic filler which is neither a hydroxide nor a substantially hydrated compound in an amount of 48 to 70 wt% of the total weight of the polymer composition,
wherein the at least one olefin copolymer (A) comprises one or more comonomer units selected from (meth)-acrylate and/or (meth)-acrylic acid in an amount of 9.0 to 60 wt% of the polar olefin copolymer.

2. A flame retardant polymer composition according to claim 1 wherein the at least one olefin copolymer (A) comprises one or more comonomer units selected from (meth)-acrylate and/or (meth)-acrylic acid in an amount of 10.0 to 60 wt% of the polar olefin copolymer.

3. A flame retardant polymer composition according to claim 1 or 2 wherein component (A) comprises at least one ethylene copolymer comprising (meth)-acrylate and/or (meth)-acrylic acid comonomer units.

4. A flame retardant polymer composition according to any of the preceding claims wherein the at least one polar olefin copolymer (A) comprises one or more co-monomers selected from C₁- to C₆-alkylacrylates, C₁- to C₆- alkyl methacrylates, acrylic acid and/or methacrylic acid including ionomers thereof.

5. A flame retardant polymer composition according to any of the preceding claims wherein the amount of component (A) is 25 to 50 wt% of the total weight of the polymer composition.

6. Flame retardant composition according to any of the preceding claims wherein the amount of component (B) is from 1.0 to 20 wt% of the total polymer composition

7. Flame retardant composition according to any of the preceding claims wherein component (B) comprises a silicone fluid and/or gum, and/or a copolymer of ethylene and at least one other comonomer which comprises a silicone group.

8. Flame retardant composition according to any of the preceding claims wherein component (B) comprises polydimethylsiloxane and/or a copolymer of ethylene and vinyl-polymethylsiloxane.

9. Flame retardant polymer composition according to any of the preceding claims wherein component (C) is present in an amount of 49 to 70 wt% of the total polymer composition.

10. Flame retardant polymer composition according to any of the preceding claims wherein component (C) comprises a carbonate, oxide and/or sulphate of an element of groups 1 to 13 of the Periodic System of the Elements.

11. A flame retardant polyolefin composition according to any of the preceding claims, wherein component (C) comprises calcium and/or magnesium carbonate.

12. A flame retardant polyolefin composition according to any of the preceding claims, wherein the composition shows a show flame spread of less than 1.5 m, determined according to prEN 50399:2007

13. Article comprising the flame retardant polymer composition according to any of the preceding claims.

14. Wire or cable comprising a layer made of the flame retardant polymer composition according to any of claims 1 to 12.

15. Use of a flame retardant polymer composition according to any of claims 1 to 12 for the production of a layer of a wire or cable.

## Patentansprüche

1. Flammhemmende Polymerzusammensetzung, die folgendes aufweist:
(A) zumindest ein polares Olefincopolymer, das ein oder mehrere Comonomer-Einheiten, die aus (Meth)acrylat und/oder (Meth)acrylsäure ausgewählt sind, in einer Menge von 20 bis 50 Gew.-% des Gesamtgewichts der Polymerzusammensetzung umfaßt;
(B) eine Silicongruppen enthaltende Verbindung und
(C) einen anorganischen Füllstoff, der weder ein Hydroxid noch eine im wesentlichen hydratisierte Verbindung ist, in einer Menge von 48 bis 70 Gew.-% des Gesamtgewichts der Polymerzusammensetzung;
wobei das zumindest eine Olefincopolymer (A) eine oder mehrere Comonomer-Einheiten, die aus (Meth)acrylat und/oder (Meth)acrylsäure ausgewählt sind, in einer Menge von 9,0 bis 60 Gew.-% des polaren Olefincopolymers umfaßt.

2. Flammhemmende Polymerzusammensetzung nach Anspruch 1, wobei das zumindest eine Olefincopolymer (A) eine oder mehrere Comonomer-Einheiten, die aus (Meth)acrylat und/oder (Meth)acrylsäure ausgewählt sind, in einer Menge von 10,0 bis 60 Gew.-% des polaren Olefincopolymers umfaßt.

3. Flammhemmende Polymerzusammensetzung nach Anspruch 1 oder 2, wobei die Komponente (A) zumindest ein Ethylencopolymer umfaßt, das Comonomer-Einheiten aus (Meth)acrylat und/oder (Meth)acrylsäure aufweist.

4. Flammhemmende Polymerzusammensetzung nach einem der vorstehenden Ansprüche, wobei das zumindest eine polare Olefincopolymer (A) ein oder mehrere Comonomere umfaßt, die aus C₁-C₆-Alkylacrylaten, C₁-C₆-Alkylmethacrylaten, Acrylsäure und/oder Methacrylsäure, einschließlich Ionomeren davon, ausgewählt sind.

5. Flammhemmende Polymerzusammensetzung nach einem der vorstehenden Ansprüche, wobei die Menge der Komponente (A) 25 bis 50 Gew.-% des Gesamtgewichts der Polymerzusammensetzung beträgt.

6. Flammhemmende Polymerzusammensetzung nach einem der vorstehenden Ansprüche, wobei die Menge der Komponente (B) 1,0 bis 20 Gew.-% der gesamten Polymerzusammensetzung beträgt.

7. Flammhemmende Polymerzusammensetzung nach einem der vorstehenden Ansprüche, wobei die Komponente (B) ein Siliconfluid und/oder einen -gummi und/oder ein Copolymer von Ethylen und zumindest einem anderen Comonomer umfaßt, das eine Silicongruppe aufweist.

8. Flammhemmende Polymerzusammensetzung nach einem der vorstehenden Ansprüche, wobei die Komponente (B) Polydimethylsiloxan und/oder ein Copolymer von Ethylen und Vinylpolymethylsiloxan umfaßt.

9. Flammhemmende Polymerzusammensetzung nach einem der vorstehenden Ansprüche, wobei die Komponente (C) in einer Menge von 49 bis 70 Gew.-% gesamten Polymerzusammensetzung vorliegt.

10. Flammhemmende Polymerzusammensetzung nach einem der vorstehenden Ansprüche, wobei die Komponente (C) ein Carbonat, Oxid und/oder Sulfat eines Elementes der Gruppen 1 bis 13 des Periodensystems der Elemente umfaßt.

11. Flammhemmende Polymerzusammensetzung nach einem der vorstehenden Ansprüche, wobei die Komponente (C) Calcium- und/oder Magnesiumcarbonat umfaßt.

12. Flammhemmende Polymerzusammensetzung nach einem der vorstehenden Ansprüche, wobei die Zusammensetzung eine Flammenausbreitung von weniger als 1,5 m zeigt, und zwar gemäß prEN 50399:2007 bestimmt.

13. Gegenstand, der die flammhemmende Polymerzusammensetzung nach einem der vorstehenden Ansprüche umfaßt.

14. Draht oder Kabel, umfassend eine Schicht, die aus der flammhemmenden Polymerzusammensetzung nach einem der Ansprüche 1 bis 12 hergestellt ist.

15. Verwendung der flammhemmenden Polymerzusammensetzung nach einem der Ansprüche 1 bis 12 für die Herstellung einer Schicht eines Drahtes oder Kabels.

## Revendications

1. Composition de polymère retardatrice de flammes comprenant
(A) au moins un copolymère d'oléfine polaire comprenant une ou plusieurs unités de comonomères choisis parmi le (méth)acrylate et/ou l'acide (méth)acrylique dans une quantité de 20 % à 50 % en poids du poids total de la composition de polymère,
(B) un composé contenant un groupe silicone, et
(C) une charge inorganique qui n'est ni un hydroxyde ni un composé sensiblement hydraté dans une quantité de 48 % à 70 % en poids du poids total de la composition de polymère,
où le au moins un copolymère d'oléfine (A) comprend une ou plusieurs unités de comonomères choisis parmi le (méth)acrylate et/ou l'acide (méth)acrylique dans une quantité de 9,0 % à 60 % en poids du copolymère d'oléfme polaire.

2. Composition de polymère retardatrice de flammes selon la revendication 1, dans laquelle le au moins un copolymère d'oléfine (A) comprend une ou plusieurs unités de comonomères choisis parmi le (méth)acrylate et/ou l'acide (méth)acrylique dans une quantité de 10,0 % à 60 % en poids du copolymère d'oléfine polaire.

3. Composition de polymère retardatrice de flammes selon la revendication 1 ou 2, dans laquelle le composant (A) comprend au moins un copolymère d'éthylène comprenant des unités de comonomères de (méth)acrylate et/ou d'acide (méth)acrylique.

4. Composition de polymère retardatrice de flammes selon l'une quelconque des revendications précédentes, dans laquelle le au moins un copolymère d'oléfine polaire (A) comprend un ou plusieurs comonomères choisis parmi les acrylates d'alkyle en C₁- à C₆-, les méthacrylates d'alkyle en C₁- à C₆-, l'acide acrylique et/ou l'acide méthacrylique y compris leurs ionomères.

5. Composition de polymère retardatrice de flammes selon l'une quelconque des revendications précédentes, dans laquelle la quantité du composant (A) est de 25 % à 50 % en poids du poids total de la composition de polymère.

6. Composition retardatrice de flammes selon l'une quelconque des revendications précédentes, dans laquelle la quantité du composant (B) est de 1,0 % à 20 % en poids de la composition de polymère totale.

7. Composition retardatrice de flammes selon l'une quelconque des revendications précédentes, dans laquelle le composant (B) comprend un fluide et/ou une gomme de silicone, et/ou un copolymère d'éthylène et au moins un autre comonomère qui comprend un groupe silicone.

8. Composition retardatrice de flammes selon l'une quelconque des revendications précédentes, dans laquelle le composant (B) comprend du polydiméthylsiloxane et/ou un copolymère d'éthylène et de vinyl-polyméthylsiloxane.

9. Composition de polymère retardatrice de flammes selon l'une quelconque des revendications précédentes, dans laquelle le composant (C) est présent dans une quantité de 49 % à 70 % en poids de la composition de polymère totale.

10. Composition de polymère retardatrice de flammes selon l'une quelconque des revendications précédentes, dans laquelle le composant (C) comprend un carbonate, un oxyde et/ou un sulfate d'un élément des groupes 1 à 13 du système périodique des éléments.

11. Composition de polyoléfine retardatrice de flammes selon l'une quelconque des revendications précédentes, dans laquelle le composant (C) comprend du carbonate de calcium et/ou de magnésium.

12. Composition de polyoléfine retardatrice de flammes selon l'une quelconque des revendications précédentes, laquelle composition présente une vitesse de propagation de flammes inférieure à 1,5 m, déterminée selon la norme prEN 50399:2007.

13. Article comprenant la composition de polymère retardatrice de flammes selon l'une quelconque des revendications précédentes.

14. Fil ou câble comprenant une couche faite de la composition de polymère retardatrice de flammes selon l'une quelconque des revendications 1 à 12.

15. Utilisation d'une composition de polymère retardatrice de flammes selon l'une quelconque des revendications 1 à 12 pour la production d'une couche d'un fil ou d'un câble.
